# EUROPEAN PATENT APPLICATION

(11) **EP 2 154 180 A1**
(43) Date of publication of application: **17.02.2010**
(21) Application number: 09167694.0
(22) Date of filing: 12.08.2009
(51) Int. Cl.: C08J 5/18, C08K 7/24

(54) **Mix for high-strength packaging film, and film produced therewith**

(30) Priority: 12.08.2008 IT RM20080457
(71) Applicant: AKRO-FLEX S.a.s. di Garegnani Antonio & C., 20080 Vermezzo (MI) (IT)
(72) Inventor: Garegani, Antonio, I-20080, Vermezzo (MI) (IT)
(74) Representative: Sarpi, Maurizio

(57) **Abstract**

A mix for making an extensible film for packaging provided with higher strength than traditional films, said mix comprising nanotubes.

## Description

The present invention relates to the packaging sector, with reference to a particular and innovative mix for the production of an extensible film of plastic material characterized by a greater strength than traditional extensible films.

More specifically, said mix comprises nanotubes.

Currently known on the market are extensible films that require large thicknesses to be able to provide a high pull strength. This means that for palletizing the products to be transported several metres of thin film or else just a few metres of film of larger thickness are required: in either case, the cost of the packaging is high in so far as it depends upon the quantity, in terms of weight, of film used.

There are also known extensible films that, to increase the strength whilst keeping the weight down, are stretched at least partially, thus limiting the residual extendibility.

Consequently, the main task of the present invention is to overcome the above drawbacks by providing an extensible film for packagings provided with a particularly high intrinsic strength.

This has been achieved, according to the invention, by providing a mix for the production of an extensible film of plastic material, characterized in that comprises nanotubes.

According to the present invention, in a preferred embodiment, the weight percentage of the nanotubes in said mix is comprised between 0.5 wt% and 5 wt%.

It is preferable for said extensible film to be made of polyethylene or some other extensible material for packaging.

The inventive idea underlying the invention is applicable with the same advantages and without any modification for providing a mix containing nanotubes for the production of a film of thermoshrinking (thermoplastic) plastic material.

It is evident that it is possible to envisage also a multilayer film, in which one or more layers that make it up are obtained with the mix described herein.

The present invention has been described and illustrated in two preferred embodiments, but it is understood that any person skilled in the branch may make equivalent modifications and/or replacements thereto, without thereby departing from the sphere of protection of the present industrial patent right.

## Claims

1. A mix for the production of a high-strength extensible or heat-shrinkable film of plastic material, **characterized in that** it comprises nanotubes.

2. The mix according to the preceding claim, **characterized in that** the weight percentage of said nanotubes is between 0.5 wt% and 5 wt%.

3. An extensible or heat-shrinkable film of plastic material, **characterized in that** it is made using the mix according to Claim 1 or Claim 2.

4. The extensible film according to the preceding claim, **characterized in that** it is made of polyethylene reinforced with nanotubes.

5. The heat-shrinkable film according to Claim 3, **characterized in that** it is made of thermoplastic material.

6. An extensible or heat-shrinkable film according to Claim 1 or Claim 2, **characterized in that** it is provided with at least one layer obtained using said mix.
